# EUROPEAN PATENT APPLICATION

(11) **EP 1 211 865 A2**
(43) Date of publication of application: **05.06.2002**
(21) Application number: 01128171.4
(22) Date of filing: 27.11.2001
(51) Int. Cl.: H04L 29/06, H04L 29/08, G06F 9/44, G06F 9/46, G06F 13/10

(54) **System and method for server-host communication connection management and screen object management system to serve anticipated future client connections**

(30) Priority: 30.11.2000 US 727915
(71) Applicant: Attachmate Corporation, Bellevue, Washington 98006 (US)
(72) Inventor: Anderson, Elizabeth A., Bellevue, Washington 98006 (US); Sherwood, Stewart E., North Bend, Washington 98045 (US); Kelley, Michael S., Woodinville, Washington 98072 (US)
(74) Representative: Grünecker, Kinkeldey, Stockmair & Schwanhäusser Anwaltssozietät

(57) **Abstract**

A system and method for server-host communication connection management allows for reductions in lag time experienced by client computers in requesting access to host computers through server computers. The system includes a pool of screen objects that are available for subsequent use to provide access to the host computers for the client computers. The system also includes a screen pool manager that monitors the number of available screen objects and initiates creation of additional available screen objects to maintain a sufficient number to reduce lag time while also enforcing a maximum limit of available screen objects to not unduly burden resources of the server computers and the host computers. In an exemplary embodiment, increment, load value, and maximum are used to implement control of both minimum and maximum numbers of unused screen objects that are available. The communication connections are preferrably based on TCP/IP, TN 3270, TN 5250 or Telnet. The pool manager preferrably applies operations research and queuing theory.

## Description

### TECHNICAL FIELD

The invention relates generally to distributed computing environments, and more particularly to a client-server-mainframe environment involving a system and method to manage connections between a server and mainframe host computer in anticipation of future user requests to reduce wait times.

### BACKGROUND OF THE INVENTION

Although information technology must deal with fast paced advances, it must still deal with legacy applications and data that have been inherited from languages, platforms, and techniques originated in an earlier computer era. Most enterprises which use computers have legacy applications and databases that continue to serve critical business needs. A primary example of such legacy applications are found on mainframe host computers, such as International Business Machines (IBM) model 390 mainframe computers and accessed by asynchronous text-based terminals.

A large portion of the computer user community no longer use asynchronous text-based terminals, but rather use graphical user interface (GUI) based personal computers (PCs). Some of these GUI based PCs run text-based terminal emulation programs to access the mainframe host computers. A disadvantage of the text-based terminal emulation programs is that the text-based screens furnished are not as user-friendly as a GUI based display. To address this and other issues some have turned to accessing mainframe host computers through intermediary server computers.

The GUI based PCs form network connections with the server computers and in turn the server computers form network connections with the mainframe host computers. Oftentimes these server computers run screen scraping programs that translate between legacy application programs (written to communicate with now generally obsolete input/output devices and user interfaces) and newer user GUI interfaces so that the logic and data associated with the legacy programs can continue to be used. Screen scraping is sometimes called advanced terminal emulation.

For example, a program that does screen scraping must take the data coming from the legacy program running on a mainframe host computer that is formatted for the screen of a text-based terminal such as an IBM 3270 display or a Digital Equipment Corporation VT100 and reformat it for a Microsoft Windows GUI or a PC based Web browser. The program must also reformat user input from the newer user interfaces (such as a Windows GUI or a Web browser) so that the request can be handled by the legacy application as if it came from a user of the older device and user interface.

Included with the advances in Information Technology have come reductions in time required to process and transfer data. Yet, delay time to establish a connection between a GUI PC through a server computer to a mainframe host computer remains problematic.

### SUMMARY OF THE INVENTION

The present invention resides in a method and system for server-host connection management to serve anticipated future client connections. Aspects of the system and method involve a network communicatively linking a host computer, a server computer, and a plurality of client computers. Aspects include a screen object pool configured to run on the server computer to contain available screen objects associated with communication connections between the server computer and the host computer to be available for use by the client computers to access the host computer through the server computer.

Further aspects include a ScreenFactory class configured to create the screen objects with the associated communication connections between the server computer and the host computer to provide access to the client computers to at least one of data and services of the host computer. A screen pool manager is configured to determine if the number of unused available screen objects is below a first number, and if so, the screen pool manager is configured to direct the ScreenFactory class to create a second number of screen objects to be added to the unused available screen objects in the screen object pool.

Additional aspects include the communication connections being based upon one or more protocols selected from a group consisting of TCP/IP, TN3270, TN3270E, TN5250, and Telnet. The screen pool manager is configured to determine the first number and second number based in part upon levels of past requests from the client computers for access to the host computer through the server computer. The screen object pool, ScreenFactory class, and the screen pool manager are configured to run on the server computer. Other aspects include the second number being an increment and the first number being the product of the increment multiplied by a load factor.

Other features and advantages of the invention will become apparent from the following detailed description, taken in conjunction with the accompanying drawings.

### BRIEF DESCRIPTION OF THE DRAWINGS

Figure 1 is a schematic diagram of a computing system suitable for employing aspects of the present invention for secure, duplex browser communication.
Figure 2 is schematic diagram of a generalized implementation of the present invention showing pluralities of client computers, server computers, and host computers.
Figure 3 is a schematic diagram of detail of the ScreenFactory class associated with embodiments of the present invention.
Figure 4 is a schematic diagram of one of the screen pools shown in Figure 3 containing an associated screen object.

### DETAILED DESCRIPTION OF THE INVENTION

A Server-Host connection management system to serve anticipated future requests by client computers to host computers through intermediary server computers is described. In exemplary embodiments, the present invention is directed for use by server based applications serving client computers with requirements for access to vintage host computers. According to conventional approaches, as a client computer requests data from a host computer through a server computer, a connection is made between the server computer and the host computer. Any lag time associated with establishing a connection between the host and server can be an unwelcome consequence to users of the client computer. This lag time is generally variable depending upon operational conditions existing at the time of the request from the client computer. Typical lag times can be from 30 milliseconds to 3.5 seconds or longer in duration. Given user expectations, any delays can be detrimental to user productivity and marketability of software applications.

The present invention takes advantage of one or more pools of screen objects that have associated screen data, screen configurations and communication connections to one or more host computers. The present invention seeks to maintain a portion of free screen objects of each of the one or more pools of screen objects. A free screen object has an associated server-host communication connection that is idle and waiting to service a client computer request for access to data on a host computer. As explained further below, various procedures can be implemented to balance between the objective of having sufficient free screen objects available in anticipation of requests by client computers without overly burdening systems used to establish and maintain the server-host communication connections. In an exemplary embodiment, the present invention is implemented as a low priority thread to maintain the reductions in lag time secured by the invention.

In the following description, numerous specific details are provided to provide a thorough understanding of embodiments of the invention. One skilled in the relevant art, however, will recognize that the invention can be practiced without one or more of these specific details, or with other equivalent elements and components, etc. In other instances, well-known components and elements are not shown, or not described in detail, to avoid obscuring aspects of the invention or for brevity.

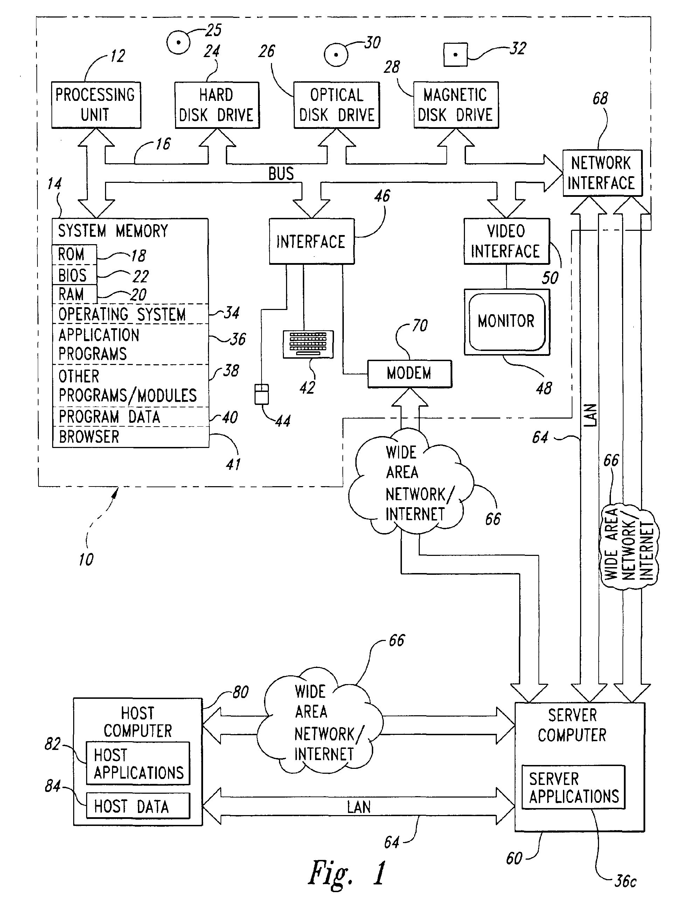

Figure 1 and the following discussion provide a brief, general description of a suitable computing environment in which the invention can be implemented. Although not required, embodiments of the invention will be described in the general context of computer-executable instructions, such as program application modules, objects, or macros being executed by a personal computer. Those skilled in the relevant art will appreciate that the invention can be practiced with other computer system configurations, including hand-held devices, multiprocessor systems, microprocessor-based or programmable consumer electronics, network PCs, mini computers, mainframe computers, and the like. The invention can be practiced in distributed computing environments where tasks or modules are performed by remote processing devices, which are linked through a communications network. In a distributed computing environment, program modules may be located in both local and remote memory storage devices.

Referring to Figure 1, a conventional personal computer referred herein as a client computer 10 includes a processing unit 12, a system memory 14 and a system bus 16 that couples various system components including the system memory to the processing unit. The client computer 10 will at times be referred to in the singular herein, but this is not intended to limited the application of the invention a single client computer since in typically embodiments, there will be more than one client computer involved. The processing unit 12 may be any logic processing unit, such as one or more central processing units (CPUs), digital signal processors (DSPs), application-specific integrated circuits (ASIC), etc. Unless described otherwise, the construction and operation of the various blocks shown in Figure 1 are of conventional design. As a result, such blocks need not be described in further detail herein, as they will be understood by those skilled in the relevant art.

The system bus 16 can employ any known bus structures or architectures, including a memory bus with memory controller, a peripheral bus, and a local bus. The system memory 14 includes read-only memory ("ROM") 18 and random access memory ("RAM") 20. A basic input/output system ("BIOS") 22, which can form part of the ROM 18, contains basic routines that help transfer information between elements within the client computer 10, such as during start-up.

The client computer 10 also includes a hard disk drive 24 for reading from and writing to a hard disk 25, and an optical disk drive 26 and a magnetic disk drive 28 for reading from and writing to removable optical disks 30 and magnetic disks 32, respectively. The optical disk 30 can be a CD-ROM, while the magnetic disk 32 can be a magnetic floppy disk or diskette. The hard disk drive 24, optical disk drive 26 and magnetic disk drive 28 communicate with the processing unit 12 via the bus 16. The hard disk drive 24, optical disk drive 26 and magnetic disk drive 28 may include interfaces or controllers (not shown) coupled between such drives and the bus 16, as is known by those skilled in the relevant art. The drives 24, 26 and 28, and their associated computer-readable media, provide nonvolatile storage of computer readable instructions, data structures, program modules and other data for the client computer 10. Although the depicted client computer 10 employs hard disk 25, optical disk 30 and magnetic disk 32, those skilled in the relevant art will appreciate that other types of computer-readable media that can store data accessible by a computer may be employed, such as magnetic cassettes, flash memory cards, digital video disks ("DVD"), Bernoulli cartridges, RAMs, ROMs, smart cards, etc.

Program modules can be stored in the system memory 14, such as an operating system 34, one or more application programs 36, other programs or modules 38 and program data 40. The system memory 14 also includes a browser 41 for permitting the client computer 10 to access and exchange data with sources such as web sites of the Internet, corporate intranets, or other networks as described below, as well as other server applications on server computers such as those further discussed below. The browser 41 is markup language based, such as Hypertext Markup Language (HTML) and operates with markup languages that use syntactically delimited characters added to the data of a document to represent the structure of the document.

While shown in Figure 1 as being stored in the system memory 14, the operating system 34, application programs 36, other programs/modules 38, program data 40 and browser 41 can be stored on the hard disk 25 of the hard disk drive 24, the optical disk 30 of the optical disk drive 26 and/or the magnetic disk 32 of the magnetic disk drive 28. A user can enter commands and information into the client computer 10 through input devices such as a keyboard 42 and a pointing device such as a mouse 44. Other input devices can include a microphone, joystick, game pad, scanner, etc. These and other input devices are connected to the processing unit 12 through an interface 46 such as a serial port interface that couples to the bus 16, although other interfaces such as a parallel port, a game port or a wireless interface or a universal serial bus ("USB") can be used. A monitor 48 or other display device is coupled to the bus 16 via a video interface 50, such as a video adapter. The client computer 10 can include other output devices, such as speakers, printers, etc.

The client computer 10 can operate in a networked environment using logical connections to one or more remote computers, such as a server computer 60. The server computer 60 can be another personal computer, a server, or other type of computer, and typically includes many or all of the elements described above for the client computer 10. The server computer 60 is logically connected to one or more of the client computers 10 under any known method of permitting computers to communicate, such as through a local area network ("LAN") 64 or a wide area network ("WAN") or the Internet 66. Such networking environments are well known in enterprise-wide computer networks, intranets, extranets, and the Internet.

When used in a LAN networking environment, the client computer 10 is connected to the LAN 64 through an adapter or network interface 68 (communicatively linked to the bus 16). When used in a WAN networking environment, the client computer 10 often includes a modem 70 or other device, such as the network interface 68, for establishing communications over the WAN/Internet 66. The modem 70 is shown in Figure 1 as communicatively linked between the interface 46 and the WAN/Internet 66. In a networked environment, program modules, application programs, or data, or portions thereof, can be stored in the server computer 60. In the depicted embodiment, the client computer 10 is communicatively linked to the server computer 60 through the LAN 64 or WAN/Internet 66 with TCP/IP middle layer network protocols; however, other similar network protocol layers are used in other embodiments. Those skilled in the relevant art will readily recognize that the network connections shown in Figure 1 are only some examples of establishing communication links between computers, and other links may be used, including wireless links.

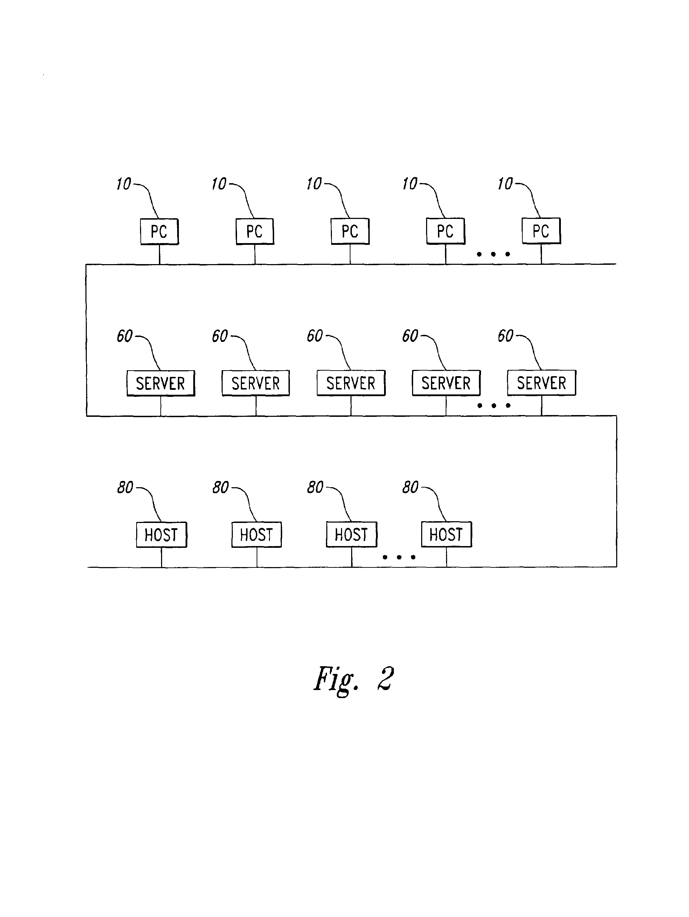

The server computer 60 is further communicatively linked to a legacy host computer 80 typically through the LAN 64 or the WAN/Internet 66 or other networking configuration such as a direct asynchronous connection (not shown). The host computer 80 in an exemplary embodiment is an International Business Machines (IBM) 390 mainframe computer configured to support IBM 3270 type terminals. Other exemplary embodiments use other vintage host computers such as IBM AS/400 series computers, UNISYS Corporation host computers, Digital Equipment Corporation VAX host computers and VT/Asynchronous host computers for the host computer 80. The host computer 80 is configured to run host applications 82 such as in system memory and store host data 84 such as business related data. A generalized schematic of an exemplary embodiment is shown in Figure 2 depicting pluralities of the client computer 10, the server 60, and the host computer 80.

An exemplary embodiment is implemented in the Sun Microsystems Java programming language to take advantage of, among other things, the cross-platform capabilities found with the Java language. For instance, exemplary embodiments include the server 60 running Windows NT, Win2000, Solaris, and Linux operating systems. In exemplary embodiments, the server 60 runs Apache Tomcat/Tomcat Jakarta web server or Microsoft Internet Internet Information Server (ISS) web server, or BEA Weblogic web server.

Apache is a freely available Web server that is distributed under an "open source" license and runs on most UNIX-based operating systems (such as Linux, Solaris, Digital UNIX, and AIX), on other UNIX/POSIX-derived systems (such as Rhapsody, BeOs, and BS2000/OSD), on AmigaOS, and on Windows NT/95/98. Windows-based systems with Web servers from companies such as Microsoft, and Netscape are alternatives, but Apache web server seems suited for enterprises and server locations (such as universities) where UNIX-based systems are prevalent. Other embodiments use other web servers and programming languages such as C, C++, and C#.

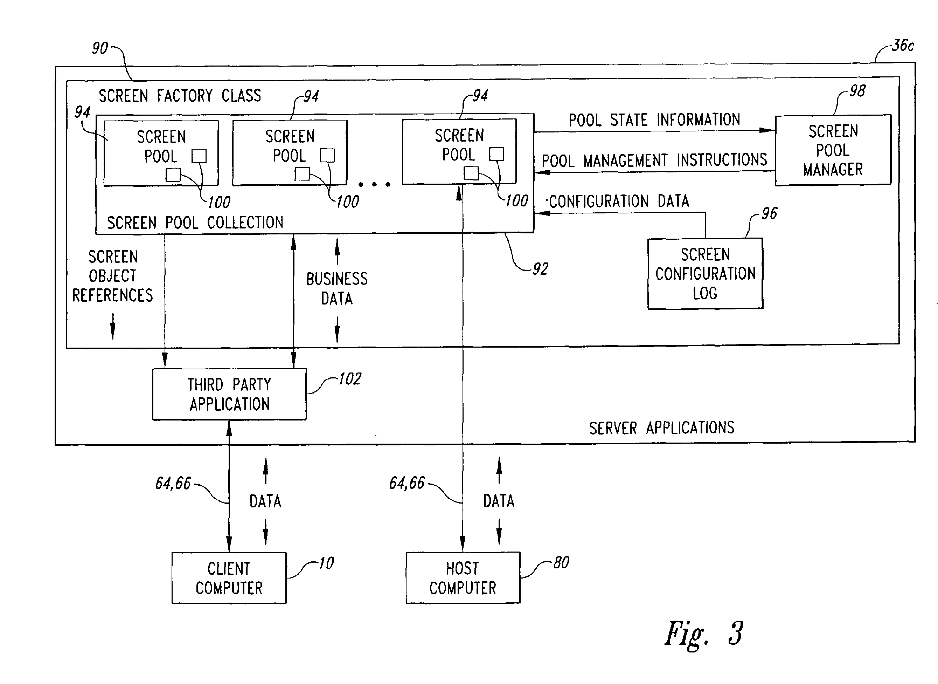

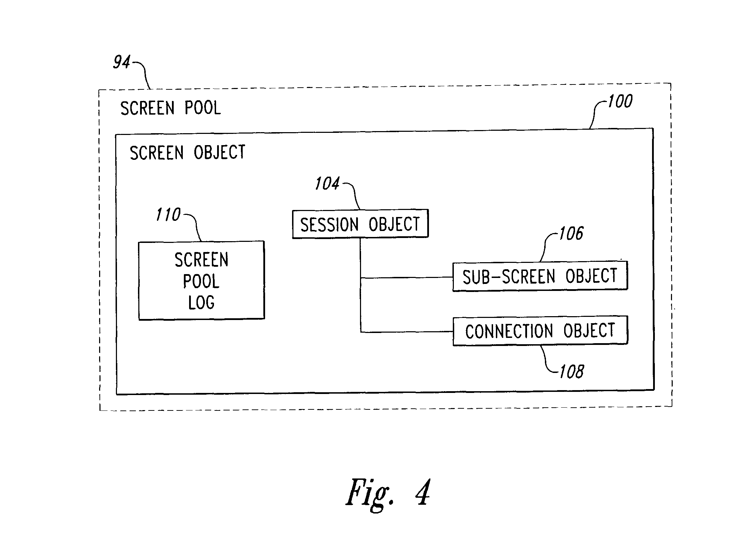

As shown in Figure 3, the depicted embodiment involves a Java class called ScreenFactory class 90 provided by Attachmate Corporation of Bellevue, WA that has a screen pool collection 92 of one or more screen pools 94, a screen configuration log 96, and a screen pool manager 98. The screen pool collection 92 affords the opportunity, for instance in an exemplary embodiment, of having one of the screen pools 94 for each one of the host computers 80 involved. The screen pools 94, as shown by the representative screen pool in Figure 4, contain one or more screen objects 100 and each screen object of a particular screen pool has the same configuration. The screen objects 100 provide particular forms of communication connections between the server computer 60 and the host computer 80 and the screen pools 94 are particular forms of pools of communication connections. Other embodiments utilize other types of communication connections and pools of communication connections. The configurations of the screen objects 100 of a particular one of the screen pools 94 are kept in the screen configuration log 96. Other embodiments used other forms of communication connection managers than the screen pool manager 98.

In operation, a Java class loader loads the ScreenFactory class 90. Since the ScreenFactory class 90 contains the screen pool manger 98, it extends the screen pool manager as a thread to be launched and run continuously as a background process so that overall performance of the server computer 60 is not detrimentally affected. In one embodiment, when one of the client computers 10 initially requests one of the screen objects 100, the screen pool collection 92 or other components of the ScreenFactory class 90, acting as a communication connection initiator, creates one of the screen pools 94 and creates and associates one of the screen objects with the screen pool. As further discussed below, the screen pool manager 98 then directs the screen pool collection 92 to create additional screen objects 100 to be available for future requests by the client computers 10.

As illustrated in Figure 4, the screen object 100 further contains a session object 104 that contains a sub-screen object 106 and a connection object 108. The sub-screen object 106 contains detail about the particular terminal screen type being used for the session object 104. Such terminal screens include 3270 terminal screens, 5250 terminal screens, and other asynchronous terminal screens. The connection object 108 is associated with the particular connection being used for the session object 104. The screen object 100 also includes a screen pool log 110 that contains information regarding the screen object and its associated screen pool 94.

The ScreenFactory class 90 is part of a Java application programming interface (API) class library called Server Enterprise Access Class Library (SEACL) implemented for server environments. SEACL is an API that is a set of Java classes and interfaces that allow scalable screen scraping applications to be created.

The ScreenFactory class 90 provides static methods to get and release the screen objects 100, provides IScreen interfaces, and provides requestScreen() and release() methods. The IScreen interfaces are configured to furnish communication connections whenever possible between the server computer 60 and the host computer 80. The requestScreen() and release() methods are used to get and release IScreens to allow object lifetime to be managed and access to underlying objects to be controlled. The ScreenFactory class 90 also implements an additional management interface that is used to gather information about all of the screen objects 100.

The primary methods of the ScreenFactory class 90 are IScreen requestScreen(java.lang.String inName) and Void release(IScreen inScreen, Boolean bReset). The former method returns a connected IScreen interface and handles all the details of creating the underlying objects and interfaces. The latter method frees an IScreen interface thereby freeing the underlying objects and putting them into a ready to reuse state or disposes of them. The latter method also sets proxy IScreens into an "all methods return ScreenReleased exception" state. The IScreen interface is a collection of Java methods that relies on the screen object 100 to handle underlying object creation and configuration to present a standard interface to client applications running on the client computer 10.

References to the screen objects 100 and data, such as business data, are exchanged between the screen objects 100 found in the screen pools 94 and one or more third party applications 102 (See Figure 3) such as business logic or integration applications provided by application developers, such as programmers, consultants, or a company's programmers. In turn, data, including screen object references and other data, such as business data, is exchanged between the third party application 102 and the client computer 10 via IScreen interface method calls.

Data is exchanged between the screen object 100 of the server computer 60 and the host computer 80 over the LAN 64 or WAN/Internet 66 using a protocol appropriate for the host computer. For instance in an exemplary embodiment, if the host computer 80 is an IBM mainframe configured to support IBM 3270 type terminals, the protocols TCP/IP, TN3270, and TN3270E, known in the art, are used. For another exemplary embodiment, if the host computer 80 is an IBM AS/400, the protocols TCP/IP and TN5250, known in the art, are used. Other protocols such as using standard Telnet facilities under the TCP/IP suite of protocols are also used as appropriate for communicating with the host computer 80.

In a conventional approach, the client computer 10 requests from the server computer 60, data or some other service to be provided by the host computer 80. The server computer 60 then establishes a communication connection with the host computer 80 so that a session can occur between the client computer 10 and the host computer. Subsequent communication occurs between the client computer 10 and the host computer 80 through the server computer 60 during the session.

Under conventional approaches, when the client computer 10 no longer requires the host computer 10, thereby causing an end to the session, the screen object 100 associated with the session is recycled back into one of the screen pools 94 of screen objects as an available screen object currently not being used, but with the communication connection between the server computer 60 and the host computer 80 still being maintained. Under other conventional approaches, once a particular session between the client computer 10 and the host computer 80 through the server computer 60 is completed, the associated screen object 100 no longer exists.

In either of these conventional approaches, there is no adjustment mechanism available to specify the number of the screen objects 100 that are currently available and not being used in one of the screen pools 94. In one of the conventional approaches, none of the screen objects 100 remain available after being released by the client computer 10. In another of the conventional approaches, the screen object 100 is recycled, but the number of available screen objects that are not currently being used is solely dependent upon a relationship between previous demand of screen objects by the client computers 10 to establish potentially available screen objects and the current demand by the client computers 10 for the screen objects. Inherent to this conventional approach is a frequently occurring situation where the screen pool 94 contains for an indefinite period of time an inadequate number of available screen objects that are not being used with no intervening mechanism to signal that more screen objects should be created when resources of the server computer 60 allow for an opportunity to do so.

In contrast to conventional approaches, a general objective of the present invention is to allow for a sufficient number of available communication connections between the server computer 60 and the host computer 80 that are not being used by one of the client computers 10 to service additional requests by the client computers without having the requesting client computers experience lag time associated with establishing a communication connection between the server computer 60 and the host computer 80.

In the context of some of the exemplary embodiments, this would mean that at any given time there would be a determined number of the screen objects 100 available, that are not being used, to reduce lag time experienced by the client computer 10 in communicating with the host computer 80. If this determined number is too high then resources of the server computer 60 and the host computer 80 would be overly burdened with establishing and maintaining a number of communication connections between each other; whereas, if this determined number is too low there would be too many instances when demand by the client computers for communication connections between the server computer and the host computer may occur too rapidly to be adequately serviced. The present invention allows for adjustability of the amount of available communication connections (the screen objects 100 in the context of the exemplary embodiments) between the server computer 60 and the host computer 80 to better tailor this amount to particular configurations and circumstances.

In an exemplary embodiment, on a continuous basis, the screen pool manager 98 receives pool state information for each of the screen pools 94 of the screen pool collection 92. Based upon this pool state information, the screen pool manager 98 determines if there are sufficient numbers of available screen objects 100 in each of the screen pools 94 and sends pool management instructions to the screen pool collection 92 or other component of the ScreenFactory class 90 acting as the communication connection initiator to increase or reduce the number of available screen objects 100 if the determined number of available screen objects is not sufficient or too large. In other embodiments, screen objects are not used, but there still exist one or more pools of available communication connections between each of the server computers 60 and the host computers 80 that an equivalent pool manager oversees and provides pool manager instructions to adjust the number of available communication connections when the pool manager determines that this number is either too large or too small.

Procedures used by the screen pool manager 98 to determine the number of available screen objects 100 or other equivalent communication connections between the server computer 60 and the host computer 80 can involve operations research principles, in general, and queueing theory in particular, found, for example, in such works as R Jain, The Art of Computer Systems Performance Analysis: Techniques for Experimental Design, Measurement, Simulation and Modeling Wiley, 1991; A O Allen, Introduction to Computer Performance Analysis with Mathematica AP Professional, Harcourt Brace & Co. 1994; and A O Allen, Probability, Statistics, and Queueing Theory with Computer Science Applications, Academic Press, 1990. Using these principles, the screen pool manager 98 can use data such as historical data of previous traffic levels of access requests from the client computers 10 of the host computers 80 to determine and adjust appropriate numbers of available communication connections in a pool between the server computers 60 and the host computers 80, in general, and appropriate numbers of available screen objects 100 in the screen pools 94, in particular, based upon the data and the principles involved.

One exemplary embodiment allows for input by a user such as an application programmer furnishing the third party application 102. Based upon the host computer 80, an increment, a load factor and a multiple are furnished to the screen pool manager 98. The increment and the multiple typically are integer numbers and the load factor is typically a fraction between zero and one. For instance, the increment may be 10, the load factor may be 0.5, and the multiple may be 3. If the number of the screen objects 100 for a given screen pool 94 that are available falls below the product of the increment and the load factor, in this case 5, the screen pool manager 98 directs, through the pool management instructions, the screen pool collection 92 or other components of the ScreenFactory class 90 acting as the communication connection initiator to increase the number of the screen objects 100 in the screen pool 94 by the amount of the increment, which in this case is 10. If the number of the screen objects 100 for a given screen pool 94 that are available goes above a maximum being the product of the increment and the multiple, in this case 30, the screen manager 98 directs, through the pool management instructions, the screen pool collection 92 or other components of the ScreenFactory class 90 acting as the communication connection initiator to decrease the number of the screen objects 100 in the screen pool 94 to the maximum of 30.

As an example, with the increment being 10, the load factor being 0.5, and the multiple being 3, after one of the screen objects 100 is initially furnished by the ScreenFactory class 90 in response to a first request for access to one of the host computers 80 from one of the client computers 10, the screen pool manager 98 determines from pool state information that additional ones of the screen objects 100 should be created since the initial screen object is furnished to a requesting client computer and is, therefore, not an available screen object. The screen pool manager 98 directs the screen pool collection 92 or other component of the ScreenFactory class 90 through the pool management instructions to increase the number of the available screen objects 100 from a present zero to ten, which is the amount of the increment. Subsequently, more of the client computers 10 request access to one or more of the host computers 80 through the server computer 60 either rapidly or in more of a drawn out fashion until the number of screen objects 100 that are available drops below the product of the load factor and the increment (in this case 5).

At the point where the number of screen objects 100 that are available drops below 5, the screen pool manager 98 directs the screen pool collection 92 or other components of the ScreenFactory class 90 acting as the communication connection initiator to create an additional number of the screen objects 100 equal to the increment, in this case 10, resulting in a total of 14 screen objects in the screen pool 94. Since the screen pool manager 98 is implemented as a low-priority background thread, the screen pool manager 98 directs creation of the additional screen objects 100 during times when higher priority server operations are not occurring. Due to this low-priority status of the screen pool manager 98, it would be possible that at times under heavy demand, the number of available screen objects 100 could fall further below the product of the load factor and increment such as to the level of 3, 2, 1, or zero available screen objects before more screen objects are created to be available in the screen object pool 94.

Over the course of operations, the client computers 10 that have requested screen objects 100 will be finished communicating with the host computer 80 and will consequently release the screen objects. As part of the ScreenFactory class 90, the screen objects 100 can be released either as false, in which case the screen objects and their communication connections are terminated, or as true, in which case the screen objects and their communication connections remain active as unused connections available for future requests. For example, a large number of the client computers 10 could request the screen objects 100 and subsequently release the screen objects as true resulting in more unused screen objects that are available for future use by the client computers than the maximum, which is the product of the multiple and the increment (in this example the maximum is 30). At the point where the number of screen objects 100 that are available goes above 30, the screen pool manager 98 directs the screen pool collection 92 or other components of the ScreenFactory class 90 acting as the communication connection initiator to terminate a number of the screen objects 100 so that the number of unused screen objects 100 that are available is equal to the maximum, in this case 30.

The increment, load factor, and maximum are adjusted based upon such factors as those related to the number of communication connections between the server computer 60 and the host computer 80 that can be maintained at any one time. Other factors include those that are associated with communication connection time-outs in which a communication connection is ended by the host computer after a predetermined amount of time has elapsed since any communication has occurred between the host computer 80 and the server computer 60. In adjusting the increment, load factor, and maximum, both competing goals of having adequate reserve of available screen objects 100 and not overly burdening resources of the server computer 60 and the host computer 80 are kept in mind. The increment, load factor, and maximum allow for adjustment of both minimum and maximum number of available screen objects 100 to acceptable levels. In the depicted embodiment, Java based static methods are used to modify the increment, load factor and maximum applied to the screen pool 94 after the screen pool is running. Other embodiments focus on other techniques such as those provided through operations research and queueing theory in adjusting minimum and maximum levels for available communication connections between the server computer 60 and the host computer 80.

From the foregoing it will be appreciated that, although specific embodiments of the invention have been described herein for purposes of illustration, various modifications may be made without deviating from the spirit and scope of the invention. Accordingly, the invention is not limited except as by the appended claims.

## Claims

1. In a network communicatively linking a host computer, a server computer, and a plurality of client computers, a communication connection management system comprising:
a communication connection pool configured to maintain in addition to communication connections through the network between the host computer and the server computer being used by client computers to access the host computer through the server computer, communication connections between the host computer and the server computer unused but available for use by the client computers to access the host computer through the server computer;
a communication connection initiator configured to create the communication connections between the server computer and the host computer; and
a communication connection pool manager configured to direct the communication connection initiator to create a first number of communication connections to be added to any unused available communication connections in the communication connection pool when the number of unused available communication connections is below a second number.

2. The communication connection management system of claim 1 wherein the communication connections are based upon one or more protocols consisting of TCP/IP, TN3270, TN3270E, TN5250, and Telnet.

3. The communication connection management system of claim 1 wherein the client computers are configured to request access to the host computer to obtain business data and the host computer is configured to retrieve business data based upon requests from the client computers.

4. The communication connection management system of claim 1 wherein the communication connection initiator is a Java based ScreenFactory class.

5. The communication connection management system of claim 1 wherein the communication connections are associated with Java based screen objects.

6. The communication connection management system of claim 1 wherein the communication connector pool manager is configured to apply operations research and queueing theory with historical traffic data of requests from the client computers for access to the host computer to determine at least one of the first number and the second number.

7. The communication connection management system of claim 1 wherein the communication connection pool manager is configured to run as a low-priority thread.

8. The communication connection management system of claim 1 wherein the communication connection initiator, the communication connection pool, and the communication connection pool manager are configured to run on the server computer.

9. The communication connection management system of claim 1 wherein the first number is an increment.

10. The communication connection management system of claim 10 wherein the second number is the product of the first number multiplied by a load factor.

11. The communication connection management system of claim 11 wherein the increment is an integer, and the load factor is greater than zero and less than or equal to one.

12. The communication connection management system of claim 1 wherein the communication connection pool manager is further configured to direct the communication connection initiator to terminate a portion of the unused available communication connections when the number of unused available communication connections in the communication connection pool exceeds a third number.

13. In a network communicatively linking a host computer, a server computer, and a plurality of client computers, a screen object management system comprising:
a screen object pool configured to run on the server computer to contain available screen objects associated with communication connections between the server computer and the host computer to be available for use by the client computers to access the host computer through the server computer;
a ScreenFactory class configured to create the screen objects with the associated communication connections between the server computer and the host computer to provide access to the client computers to at least one of data and services of the host computer; and
a screen pool manager configured to determine if the number of unused available screen objects is below a first number, and if so, the screen pool manager being configured to direct the ScreenFactory class to create a second number of screen objects to be added to the unused available screen objects in the screen object pool.

14. The screen object management system of claim 13 wherein the communication connections are based upon one or more protocols selected from a group consisting of TCP/IP, TN3270, TN5250, and Telnet.

15. The screen object management system of claim 13 wherein the screen pool manager is configured to determine the first number and second number based in part upon levels of past requests from the client computers for access to the host computer through the server computer.

16. The screen object management system of claim 13 wherein the screen object pool, ScreenFactory class, and the screen pool manager are configured to run on the server computer.

17. The screen object management system of claim 13 wherein the second number is an increment.

18. The screen object management system of claim 13 wherein the first number is the product of the increment multiplied by a load factor.

19. The screen object management system of claim 13 wherein the increment is an integer, and the load factor is greater than zero and less than or equal to one.

20. In a network communicatively connecting a host computer, a server computer, and a plurality of client computers, a method for managing communication connections comprising:
maintaining a pool of available communication connections between the host computer and the server computer to be available for use by the client computers that request communication connections to access the host computer through the server computer;
determining the number of available communication connections in the pool available for future requests;
determining if the number of available communication connections in the pool available for future requests is at least at a desired amount of available communication connections greater than zero; and
increasing the number of available communication connections in the pool available for future requests if the number of available communication connections in the pool available for future requests is at or below the desired amount.

21. The method of claim 20 wherein the desired amount is a first number and the number of available communication connections are increased by using a second number as the amount of increase.

22. The method of claim 21, further including using operations research and queueing theory applied to historical traffic data of requests from the client computers for access to the host computer to determine at least one of the first number and the second number.

23. The method of claim 21 wherein the number of available communication connections are increased using an increment for the second number.

24. The method of claim 23 wherein the first number for the desired amount is a product of the increment value multiplied by a load factor.

25. The method of claim 24 wherein the number of available communication connections are increased by the second number using an integer as the increment value and the desired amount is determined with the first number using the load factor as being greater than zero and less than or equal to one.

26. The method of claim 30, further including decreasing the number of available communication connections in the pool available for future requests if the number of available communication connections in the pool available for future requests is at or above a predetermined amount.

27. In a network communicatively connecting a host computer, a server computer, and a plurality of client computers, a method for managing communication connections comprising:
maintaining a pool of available screen objects associated with communication connections between the host computer and the server computers to be available for use by the client computers that request communication connections to access the host computer through the server computer;
determining the number of available communication connections in the pool available for future requests;
determining if the number of available screen objects in the pool available for future requests is at least at a desired amount of available screen objects greater than zero; and
increasing the number of available screen objects in the pool available for future requests if the number of available screen objects in the pool available for future requests is at or below the desired amount.

28. The method of claim 27 wherein the desired amount is a first number and the number of available screen objects are increased by a second number as the amount of the increase.

29. The method of claim 28, further comprising determining at least one of the first number and the second number based at least in part upon levels of past requests from the client computers for access to the host computer through the server computer.

30. The method of claim 28 wherein the second number is an increment.

31. The method of claim 30 wherein the first number is the product of the increment multiplied by a load factor.

32. The method of claim 31 wherein the increment is an integer and the load factor is greater than zero and less than or equal to one.
